# EUROPEAN PATENT APPLICATION

(11) **EP 3 778 268 A1**
(43) Date of publication of application: **17.02.2021**
(21) Application number: 19781726.5
(22) Date of filing: 26.03.2019
(51) Int. Cl.: B60G 13/16, B60K 7/00, F16F 15/02, H02G 3/30

(54) **POWER LINE ROUTING STRUCTURE FOR IN-WHEEL MOTOR DRIVE DEVICE**

(30) Priority: 02.04.2018 JP 2018070983
(71) Applicant: NTN Corporation, Osaka-shi, Osaka 550-0003 (JP)
(72) Inventor: SUGIURA, Saori, Iwata-shi, Shizuoka 438-8510 (JP); TAMURA, Shiro, Iwata-shi, Shizuoka 438-8510 (JP)
(74) Representative: Bockhorni & Brüntjen Partnerschaft Patentanwälte mbB
(86) International application number: PCT/JP2019/012766
(87) International publication number: WO 2019/194023

(57) **Abstract**

A power line wiring structure of the present invention provided on a vehicle including an in-wheel motor drive device (10), a vehicle body side member, a suspension device (41) that couples the in-wheel motor drive device (10) to the vehicle body side member, a power supply unit mounted on the vehicle body side member, and a power line (51) having one end connected with the power supply unit and the other end connected with the in-wheel motor drive device includes: a clamp means (52) for gripping a halfway part of the power line (51); and an elastic member (53) supporting the clamp means (52), the elastic member (53) being attached and fixed to a suspension member (41d) which is one part of the suspension device and is fixed to the in-wheel motor driving device. The elastic member (53) and the clamp means (52) constitute a dynamic damper attached to the in-wheel motor drive device (10), with the power line (51) as a mass body.

## Description

### Technical Field

The present invention relates to an in-wheel motor drive device that is arranged inside a wheel and drives the wheel.

### Background Art

Wheels are grounded on a road surface while rotating, and become a noise source and a vibration source due to collision of unevenness of the road surface and the tread pattern of the tire. When such noise and vibration are transmitted to a vehicle body, ride quality deteriorates.

As a technique for reducing vibration and noise transmitted to a vehicle body, there is a structure in which a dynamic damper is attached to a wheel support member in a McPherson strut type suspension of an idler wheel, as disclosed in Japanese Unexamined Patent Publication No. H11-141601 (Patent Literature 1), for example. Vibration of wheels is input from a wheel support member to a vehicle body via suspension members such as a suspension arm, a suspension link, a strut, a suspension spring, and a suspension damper, and hence the routes are complicated and numerous. Therefore, this prior art is intended to effectively reduce vibration by attaching a dynamic damper to a wheel support member to suppress resonance before vibration is dispersed in each route.

### Citation List

### Patent Literature

Patent Literature 1: Japanese Unexamined Patent Publication No. H11-141601

### Summary of Invention

### Technical Problem

In an electric vehicle in which an in-wheel motor drives a wheel, vibration of the in-wheel motor itself is generated in addition to vibration to be input from a road surface to the wheel, and hence vibration is larger than that of a vehicle including a conventional idler wheel. Therefore, when the prior art described in Patent Literature 1 is applied to an in-wheel motor, in order to suppress the vibration of the in-wheel motor, it is necessary to increase a vibration suppressing effect by increasing the weight of a dynamic damper compared with the prior art.

However, in an in-wheel motor vehicle having unsprung weight larger than that of an idler wheel, the unsprung weight further increases when a dynamic damper is attached, and thus there is a concern that the suspension characteristic is sacrificed and the ride quality deteriorates accordingly. Therefore, the in-wheel motor vehicle needs a technique capable of reducing vibration without increasing the unsprung weight.

In view of the above circumstances, an object of the present invention is to provide a technique that reduces noise and vibration of wheels without causing an excessive increase in unsprung weight in an electric vehicle in which an in-wheel motor drives a wheel.

### Solution to Problem

For this purpose, a power line wiring structure of an in-wheel motor drive device according to the present invention is premised to be provided on a vehicle including an in-wheel motor drive device, a vehicle body side member, a suspension device that couples the in-wheel motor drive device to the vehicle body side member, a power supply unit mounted on the vehicle body side member, and a power line having one end connected with the power supply unit and the other end connected with the in-wheel motor drive device. Then, the power line wiring structure includes a clamp means for gripping a halfway part of the power line, and an elastic member supporting the clamp means. The elastic member is attached and fixed to a suspension member which is one part of the suspension device and is fixed to the in-wheel motor drive device so as to be incapable of relative movement. Otherwise, the elastic member is attached and fixed to a casing of the in-wheel motor drive device. The elastic member and the clamp means constitute a dynamic damper with the power line as a mass body.

According to the present invention, the power line and the clamp means are elastically supported by the elastic member, and the power line heavy in weight including metal functions as a mass body of the dynamic damper. The dynamic damper function can reduce the transmission of the vibration caused by the grounding of a wheel on a road surface and the vibration of the in-wheel motor drive device itself to a sub-frame and a vehicle body side member of the vehicle body via a suspension device. According to the present invention, the resonance frequency band determined by the mass of the power line and clamp means and the rigidity of the elastic member is adjusted to the resonance frequency band of a resonating unsprung component (e.g., a suspension link and a suspension arm of the suspension device), and whereby the resonance of an unsprung component can be effectively suppressed. According to the present invention, since an existing power line is used as a dynamic damper, the unsprung weight of the suspension device does not increase. Accordingly, the suspension characteristics are not sacrificed.

As one aspect of the present invention, the clamp means has an elastic band bundling a plurality of power lines, a base member coupled with the elastic member, and a retaining member removably attached to the base member and holding the elastic band together with the base member. According to this aspect, since the clamp means further has an elastic band, the power line is supported more elastically by the elastic band, and the durability of the power line can be improved.

As a preferred aspect of the present invention, the suspension member to which the elastic member is attached is a lower end region of a vertically extending strut, and the elastic member is attached and fixed to the lower end region of the strut. According to this aspect, vibration via the strut can be reduced. As another aspect, the elastic member may be attached to the in-wheel motor drive device.

An arrangement layout of the clamp means may correspond to a shape of the in-wheel motor drive device. In the case where the in-wheel motor drive device is arranged offset from an axle in a vehicle front-back direction, the clamp means may be arranged offset on the opposite side in the vehicle front-back direction to the in-wheel motor drive device. As a preferred aspect of the present invention, the clamp means is arranged at a front or back of the strut with respect to the vehicle front-back direction. As another aspect, the clamp means may be arranged inside the strut in a vehicle width direction.

### Advantageous Effects of Invention

Thus, according to the present invention, it is possible to reduce transmission of noise and vibration of wheels and noise and vibration of the in-wheel motor drive device to the vehicle body side member. Furthermore, it is possible to prevent resonance of the suspension device due to the vibration and to prevent the ride quality from deteriorating.

### Brief Description of Drawings

[Fig. 1] Fig. 1 is a side view showing an embodiment of the present invention.
[Fig. 2] Fig. 2 is a perspective view showing an elastic member and a clamp means of the embodiment.
[Fig. 3] Fig. 3 is a cross-sectional view showing the elastic member and the clamp means of the embodiment.
[Fig. 4] Fig. 4 is a side view illustrating a resonance mode of the embodiment.
[Fig. 5] Fig. 5 is a side view showing another embodiment of the present invention.

### Description of Embodiments

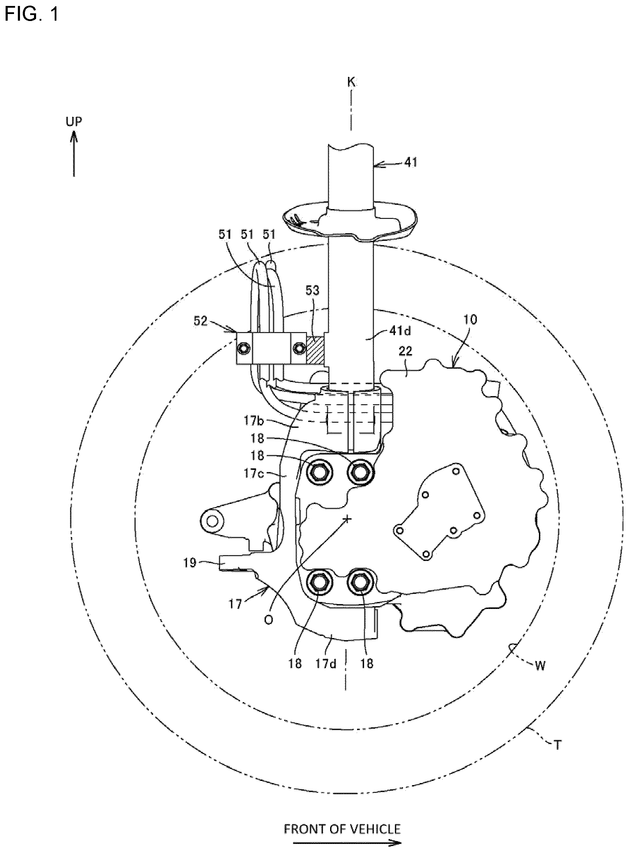

Embodiments of the present invention will be described below in detail with reference to the drawings. Fig. 1 is a side view showing a wiring structure of a power line according to an embodiment of the present invention, and shows a state seen from inside in a vehicle width direction. A rim portion of a road wheel W partitions an inner space region of a wheel. An in-wheel motor drive device 10 is arranged in the inner space region of the road wheel W. A tire T indicated by a virtual line is fitted into an outer periphery of the road wheel W. The road wheel W and the tire T constitute the wheel. The in-wheel motor drive device 10 is coupled with the road wheel W to drive the wheel.

The in-wheel motor drive device 10 includes a rotating electric machine (motor), a wheel hub bearing, and a parallel axis gear reducer. An axis O of the wheel hub bearing coincides with the axle. The rotating electric machine is arranged offset from the axis O to the front of the vehicle. Therefore, the in-wheel motor drive device 10 is offset to the front of the vehicle as seen from the axis O.

The in-wheel motor drive device 10 is coupled to a vehicle body side member (not illustrated) via a suspension device. The vehicle body side member is a member attached to the vehicle body side as seen from the member to be described, and is, for example, a sub-frame or a vehicle body as seen from the suspension device. The suspension device shown in Fig. 1 is a strut type suspension device, and includes a strut 41 and a lower arm (not illustrated) as a suspension member.

The strut 41 is a vertically extending suspension member arranged above the in-wheel motor drive device 10, and more specifically, a shock absorber in which an attenuating means such as a damper and an elastic means such as a coil spring are combined. When the in-wheel motor drive device 10 attached down the spring as seen from the suspension member vertically bounds and rebounds, the strut 41 vertically expands and contracts, thereby attenuating the bound and rebound of the in-wheel motor drive device 10. An upper end (not illustrated) of the strut 41 is coupled to the vehicle body side member. A lower end of the strut 41 is attached and fixed to a suspending bracket 17 of the in-wheel motor drive device 10. A strut lower end region 41d including the lower end of the strut 41 is, for example, an external cylinder member of a telescopic damper, and is one component occupying the lower end region of the strut 41. The strut lower end region 41d does not move relative to the in-wheel motor drive device 10.

The suspending bracket 17 is substantially C shaped as shown in Fig. 1, and is attached and fixed to a casing forming an outer shell of the in-wheel motor drive device 10 by a bolt 18. An upper end portion 17b of the suspending bracket 17 is positioned in an upper part of the in-wheel motor drive device 10, and is fixed to the strut lower end region 41d by a fixing means such as a bolt. A lower end portion 17d of the suspending bracket 17 is positioned in a lower part of the in-wheel motor drive device 10, and coupled to a lower arm (not illustrated) via a ball joint (not illustrated). The lower arm is capable of relative movement with respect to the in-wheel motor drive device 10 and swings vertically.

A vertical center region 17c of the suspending bracket 17 extends vertically, and couples the upper end portion 17b and the lower end portion 17d. The vertical center region 17c overlaps the vertical position of the axis O that becomes the rotation center of the wheel. The vertical center region 17c is provided with a tie rod arm 19. The tie rod arm 19 extends in a vehicle front-back direction. In the present description, vehicle front (also simply referred to as front) refers to a direction in which the electric vehicle travels forward, and vehicle back (also simply referred to as back) refers to a direction in which the electric vehicle travels backward. It is to be noted that the suspending bracket 17 is arranged at the back of the in-wheel motor drive device 10. The tie rod arm 19 projects backward from the vertical center region 17c. The arrangement of the suspending bracket 17, the tie rod arm 19, and a clamp means 52 described later is on the opposite side to the offset direction of the in-wheel motor drive device 10 with respect to the vehicle front-back direction.

The ball center of the ball joint is arranged at the lower end portion 17d of the suspending bracket 17. A virtual straight line passing through the upper end of the strut 41 and the ball center of the ball joint constitutes a turning axis K. When a steering device (not illustrated) pushes and pulls the tie rod arm 19 in the vehicle width direction, the in-wheel motor drive device 10 turns together with the road wheel W about the turning axis K.

A plurality of power lines 51 is wired between the in-wheel motor drive device 10 and the vehicle body side member. In the present embodiment, the number of power lines 51 is three. These power lines 51 supply three-phase alternating-current power from a power supply unit mounted on the vehicle body side member (not illustrated) to the in-wheel motor drive device 10.

One end of each power line 51 that is not illustrated is connected with an inverter (not illustrated) mounted on the vehicle body side member. The other end of each power line 51 is connected with a terminal box 22 provided in the upper part of the in-wheel motor drive device 10.

Each power line 51 extending from the terminal box 22 is wired in an inverted U shape so as to extend in the vehicle front-back direction passing through the outside in the vehicle width direction relative to the strut lower end region 41d and the suspending bracket 17, change its orientation and extend upward in the vehicle back relative to the suspending bracket 17, and change its orientation from up to down towards the inside in the vehicle width direction. The three power lines 51 are bundled by the clamp means 52 in a halfway portion. Each power line 51 supported by the clamp means 52 has an inverted U shaped wiring region that is closed at its upper side and open at its lower side, and the halfway portion of each power line 51 is a farther one of the end portions of inverted U shaped wiring region from the in-wheel motor drive device 10. The clamp means 52 is supported by an elastic member 53. The elastic member 53 is fixed to the clamp means 52 on one side and fixed to the strut lower end region 41d on the other side.

Since the clamp means 52 is fixed to the in-wheel motor drive device 10 via the elastic member 53 and the strut lower end region 41d, it becomes a component of the unsprung member as seen from the suspension device. Therefore, the clamp means 52 turns together with the in-wheel motor drive device 10, and bounds and rebounds vertically.

It is to be noted that only the elastic member 53 is interposed between the clamp means 52 and the strut lower end region 41d. Nothing is interposed between the clamp means 52 and the in-wheel motor drive device 10, and the clamp means 52 is separated from the in-wheel motor drive device 10.

The elastic member 53 elastically deforms with a relative movement of the power line 51 and the in-wheel motor drive device 10. Specifically, when the in-wheel motor drive device 10 bounds and rebounds vertically or turns about the turning axis K, the power line 51 is bent and stretched, and the elastic member 53 elastically deforms.

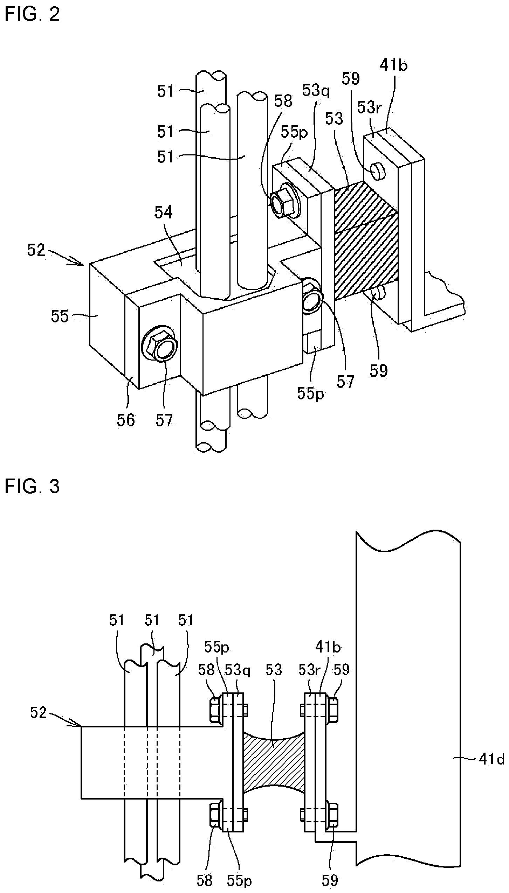

Fig. 2 is a perspective view showing the clamp means and the elastic member of the embodiment. Fig. 3 is a cross-sectional view showing the clamp means and the elastic member of the embodiment. For the purpose of easy understanding of the shape of the elastic member, the elastic member is hatched in Figs. 2 and 3. The clamp means 52 has an elastic band 54 surrounding each power line 51, a base member 55, and a retaining member 56. The base members 55 and the retaining member 56 make a pair in order to hold and fix the elastic band 54. The elastic band 54 is formed of an elastically deformable material such as rubber, elastomer, and sponge. The elastic band 54 is provided with a through hole through which each power line 51 passes. Each through hole extends vertically. Three through holes are provided in one elastic band, and the power line 51 is passed through each through hole, thereby bundling the three power lines 51.

The base member 55 and the retaining member 56 are formed of a non-deformable material such as metal or plastic. A recess portion into which the elastic band 54 is fitted is provided in the center portion of the base member 55 and the center portion of the retaining member 56. When the base member 55 and the retaining member 56 are made to face each other so that the recess portions of the base member 55 and the retaining member 56 face each other, and the elastic band 54 is installed in the recess portions, the elastic band 54 is surrounded by the base member 55 and the retaining member 56. Each power line 51 extends upwards and downwards from the base member 55 and the retaining member 56.

Through holes through which bolts 57 are passed are formed at both end portions of the retaining member 56. Female threads screwed with the bolts 57 are formed at both end portions of the base member 55. The end portions of the base member 55 and the retaining member 56 are coupled and fixed to each other by fixing means such as the bolts 57 and the female threads. This causes the elastic band 54 and each power line 51 to be retained so as to be sandwiched between the base member 55 and the retaining member 56.

One end portion of the base member 55 is provided with a pair of plate portions 55p. The pair of plate portions 55p projects upwards and downwards from the base member 55. Each plate portion 55p is coupled and fixed to a tip plate 53q of the elastic member 53 by a bolt 58.

The tip plate 53q is fixed to the tip side of the elastic member 53. A root plate 53r is fixed to the root side of the elastic member 53. The elastic member 53 is formed of an elastically deformable material such as rubber. Therefore, when the elastic member 53 elastically deforms, the tip plate 53q displaces with respect to the root plate 53r. The root plate 53r is coupled and fixed to a bracket 41b by a fixing means such as a bolt 59. It is to be noted that in Fig. 3, elastic deformation of the elastic member 53 is expressed in an exaggerated manner.

The bracket 41b is a member arranged above the suspending bracket 17 and coupled with the strut lower end region 41d, and is arranged offset from the strut lower end region 41d in the vehicle front-back direction.

The clamp means 52 of the present embodiment does not simply support the power line 51 but functions as a dynamic damper of the in-wheel motor drive device 10 together with the elastic member 53.

That is, since the clamp means 52 retains the halfway portion of the power line 51, it supports half of the weight of the inverted U shaped region of the power line 51 and the weight of the region extending downward from the clamp means 52. This allows the existing power line 51 to be used as a mass body of the dynamic damper. The elastic member 53 is fixed to a component (strut lower end region 41d) coupled with the in-wheel motor drive device 10, and supports the clamp means 52.

According to the present embodiment, since the power line 51, the clamp means 52, and the elastic member 53 altogether function as a dynamic damper, it is possible to reduce the noise source and vibration source of the wheel generated on the in-wheel motor drive device 10 side. Since the existing components are used as a dynamic damper, it is not necessary to newly attach a dedicated dynamic damper, and cost and weight can be reduced.

Since the clamp means 52 of the present embodiment is supported by the strut 41 with the elastic member 53, even if a mechanical load is applied to the power line 51 at the time of turning the in-wheel motor drive device 10 or the like, the elastic member 53 bows to reduce the load, thereby improving the durability of the power line 51. Even if vibration is input to the power line 51 from the spring downside of the suspension device at the time of travel of the electric vehicle, the durability of the power line 51 against the vibration caused by the vibration input is also improved.

Since the elastic member 53 of the present embodiment is provided to the suspension member (strut lower end region 41d) attached and fixed to the in-wheel motor drive device 10, noise and vibration of the wheel can be reduced before the noise and the vibration are transmitted to the vehicle body side member via the suspension device.

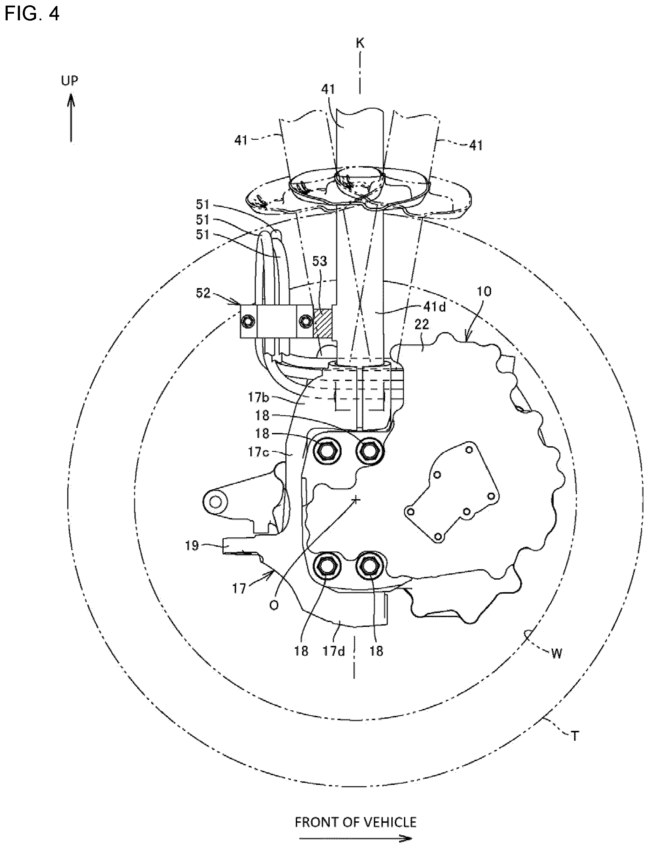

Fig. 4 is a schematic view illustrating the resonance mode of the present embodiment. As one resonance mode, the strut 41 of the suspension device vibrates in the vehicle front-back direction with the axis O of the in-wheel motor drive device 10 as a fulcrum. In the resonance mode shown in Fig. 4, the vibration width becomes larger towards the upper end side of the strut 41, and uncomfortable vibration is transmitted to the vehicle body side member.

According to the present embodiment, since the strut 41 is provided with the elastic member 53 and the clamp means 52 as a dynamic damper, the resonance mode shown in Fig. 4 can be effectively reduced, and the ride quality does not deteriorate. The resonance frequency band determined by the mass of the power line 51 and clamp means 52 and the rigidity of the elastic member 53 is adjusted to the resonance frequency band of the resonating component (the strut 41, the suspending bracket 17, or the like), and whereby the resonance of the component can be effectively suppressed.

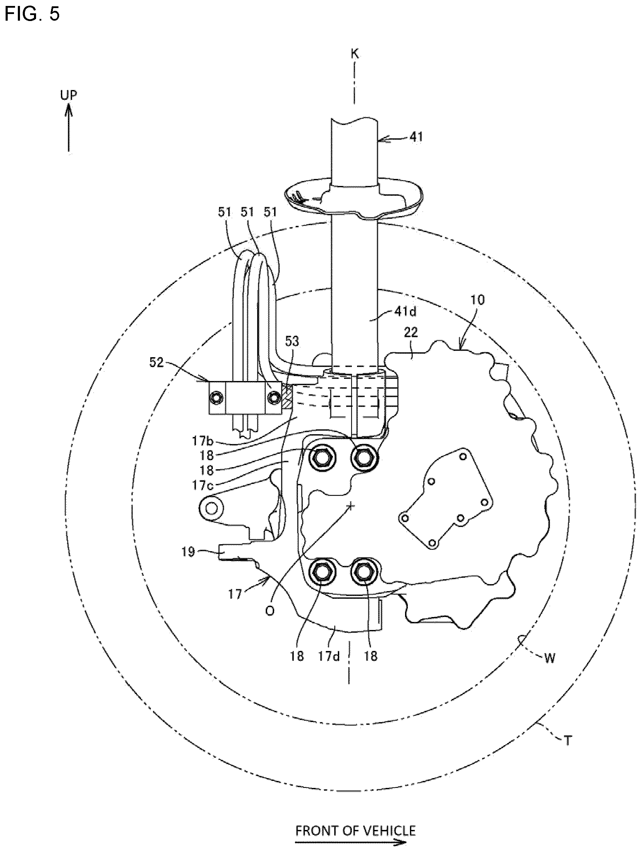

Next, another embodiment of the present invention will be described. Fig. 5 is a side view showing another embodiment of the present invention. For another embodiment, components common to those of the above-described embodiment are given identical reference numerals and description thereof is omitted, and different components will be described below. In another embodiment, the elastic member 53 is attached and fixed to the suspending bracket 17 in place of the strut lower end region 41d described above. This causes the plurality of power lines 51 to be supported by the suspending bracket 17 of the in-wheel motor drive device 10 via the elastic member 53. Only the elastic member 53 is interposed between the clamp means 52 and the in-wheel motor drive device 10. Nothing is interposed between the clamp means 52 and the strut lower end region 41d, and the clamp means 52 is separated from the strut 41.

According to another embodiment, since the elastic member 53 is fixed to the upper end portion 17b of the suspending bracket 17, the same effect as that of the embodiment shown in Fig. 1 can be achieved. That is, it is possible to reduce noise and vibration of the wheel, and to reduce the resonance mode shown in Fig. 4.

Although not illustrated, the elastic member 53 may be fixed to the casing of the in-wheel motor drive device 10 as a variation.

While the embodiments of the present invention have been described with reference to the drawings, the present invention is not limited to the illustrated embodiments. Various modifications and variations can be made to the illustrated embodiments within an identical scope to the present invention or within an equivalent scope to the present invention. For example, some components may be extracted from one embodiment described above, some other components may be extracted from another embodiment described above, and these extracted components may be combined.

### Industrial Applicability

The present invention is advantageously utilized in electric vehicles and hybrid vehicles.

### Reference Signs List

- 10: in-wheel motor drive device
- 17: suspending bracket
- 41: strut
- 41b: bracket
- 41d: strut lower end region
- 51: power line
- 52: clamp means
- 53: elastic member
- 54: elastic band
- 55: base member
- 55p: plate portion
- 56: retaining member
- K: turning axis
- O: axis
- T: tire
- W: road wheel

## Claims

1. A power line wiring structure of an in-wheel motor drive device, the structure provided on a vehicle including an in-wheel motor drive device, a vehicle body side member, a suspension device that couples the in-wheel motor drive device to the vehicle body side member, a power supply unit mounted on the vehicle body side member, and a power line having one end connected with the power supply unit and another end connected with the in-wheel motor drive device, comprising:
a clamp means for gripping a halfway part of the power line; and
an elastic member supporting the clamp means, the elastic member being attached and fixed to a suspension member which is one part of the suspension device and is fixed to the in-wheel motor driving device so as to be incapable of relative movement or the elastic member being attached and fixed to a casing of the in-wheel motor driving device, wherein
the elastic member and the clamp means constitute a dynamic damper with the power line as a mass body.

2. The power line wiring structure of an in-wheel motor drive device according to claim 1, wherein the clamp means has an elastic band bundling a plurality of power lines, a base member coupled with the elastic member, and a retaining member removably attached to the base member and holding the elastic band together with the base member.

3. The power line wiring structure of an in-wheel motor drive device according to claim 1 or 2, wherein
the suspension member is a lower end region of a vertically extending strut, and
the elastic member is attached and fixed to the lower end region of the strut.

4. The power line wiring structure of an in-wheel motor drive device according to claim 3, wherein the clamp means is arranged at a front or back of the strut with respect to a vehicle front-back direction.
